# EUROPEAN PATENT SPECIFICATION

(11) **EP 1 232 687 B1**
(45) Date of publication and mention of the grant of the patent: **07.12.2005**
(21) Application number: 02394024.0
(22) Date of filing: 14.02.2002
(51) Int. Cl.: A01K 1/015

(54) **A floor for an animal house**
Tierbehausungsboden
Sol pour logement d'animaux

(30) Priority: 19.02.2001 IE 20010145
(43) Date of publication of application: 21.08.2002
(73) Proprietor: Earls, Michael, Athenry, County Galway (IE)
(72) Inventor: Earls, Michael, Athenry, County Galway (IE)
(74) Representative: Brophy, David Timothy

(56) References cited:
- EP-A- 0 435 050
- DE-A- 2 442 331
- GB-A- 2 089 391

## Description

The present invention relates to a floor for an animal house, and a floor tile for use in such a floor.

EP 0 435 050 discloses a covering for a slotted floor such as is found in an animal house. The covering is cut from a single sheet to fit the measurements of the floor, and has parallel lengthwise gaps to match the dimensions of the underlying floor.

GB-A-2 089 391 discloses a method of repairing slotted concrete flooring which involves fitting slotted concrete slabs over the original damaged floor, the slots in the slabs being keyed to the original slots in the underlying floor by projections on the underside of the slabs.

According to the main claim 1 of the present invention there is provided a floor for an animal house, comprising a concrete base (30) having a plurality of elongated apertures (34) disposed in rows, and a plurality of rubber floor tiles (10) each having at least one slot (16) formed therein, said tiles disposed on the concrete base and at least partially revealing at least some of the apertures, each tile being retained in position on the base by at least one projection (12) extending downwardly from the underside of the tile into at least one aperture in the base, characterised in that:
said tiles (10) are laid in rows along each alternate row of apertures (34), so that the apertures in those rows are revealed by the slots (16) in the tiles and the apertures in the intervening rows are revealed by the gaps (38) between the edges of adjacent rows of tiles.

The invention also provides a floor tile for a floor as above.

It is to be understood that terms of shape, orientation and configuration used herein, such as "parallel", "coincident", etc., are not intended to be interpreted with mathematical precision.

An embodiment of the invention will now be described, by way of example, with reference to the accompanying drawings, in which:
Fig. 1 is a perspective view of a floor tile according to an embodiment of the invention;
Fig. 2 is a plan view of the tile of Fig. 1;
Fig. 3 is a longitudinal cross-section of the tile of Fig. 1 taken on the line III-III of Fig. 2;
Fig. 4 is a transverse cross-section of the tile of Fig. 1 taken on the line IV-IV of Fig. 2;
Fig. 4A is an enlarged detail of Fig. 4;
Fig. 5 is a plan view of a concrete base on which the tiles of Fig. 1 may be laid according to the embodiment of the invention;
Fig. 6 is a plan view of a concrete base with the tiles of Fig. 1 laid thereon;
Fig. 7 is a transverse cross-section of the floor structure of Fig. 6 taken on the line VII-VII; and
Fig. 8 is a longitudinal cross-section of the floor structure of Fig. 6 taken on the line VII-VII.

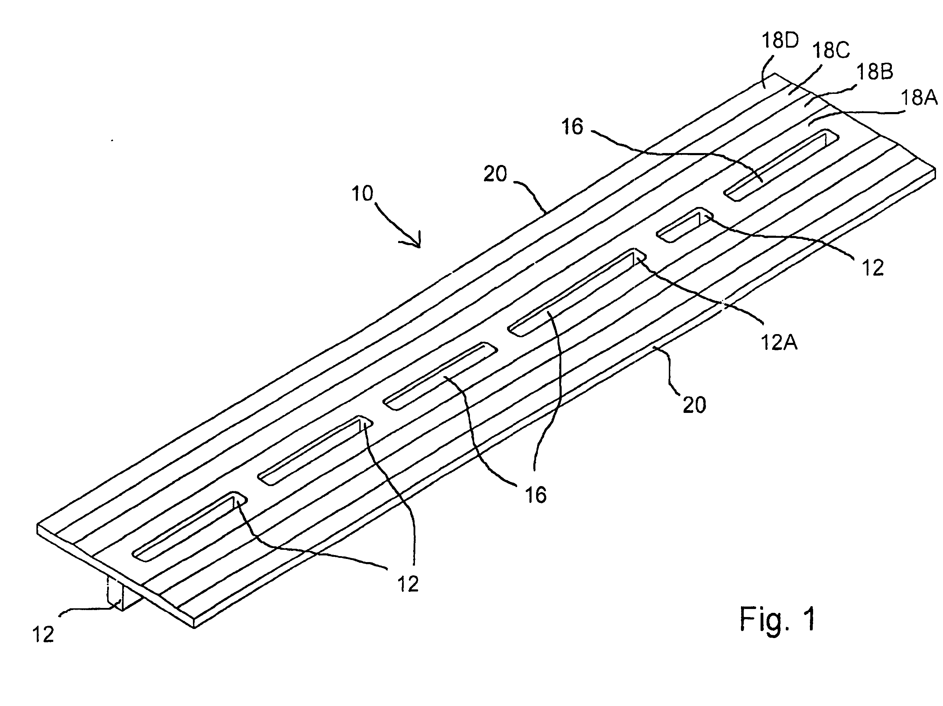

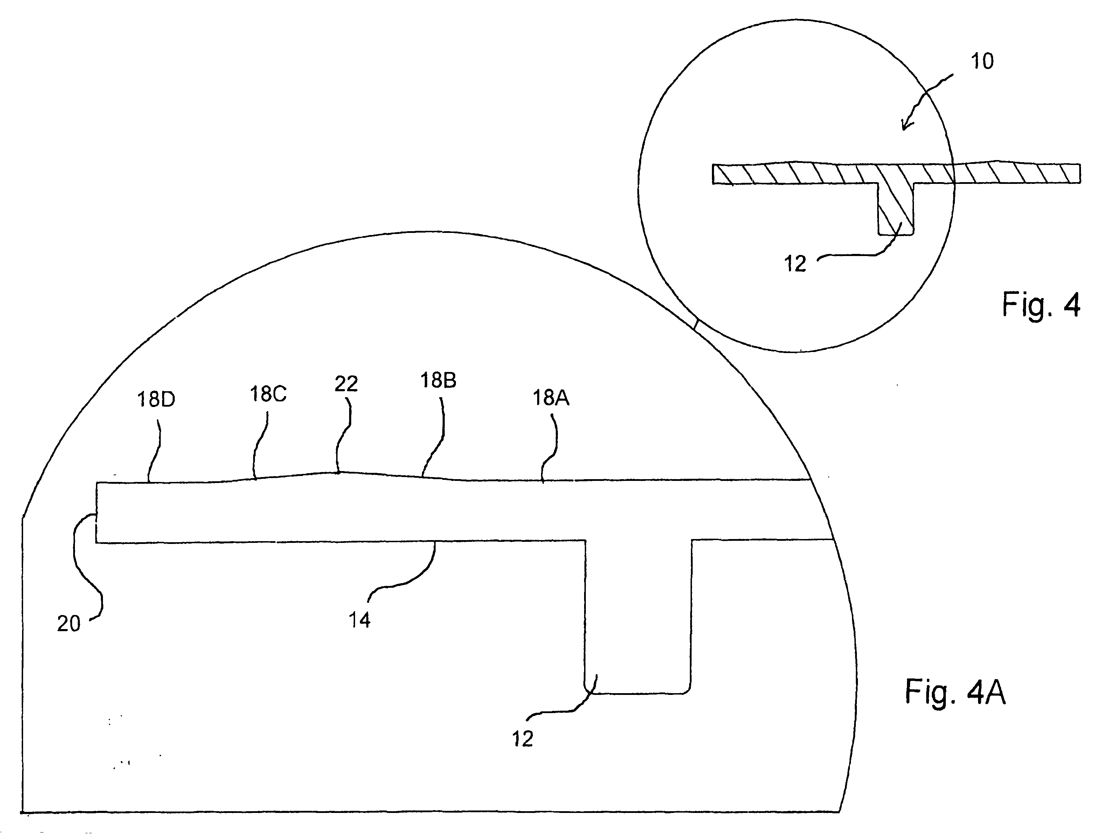

Referring first to Figs. 1 to 4, a floor tile for use in the construction of a slat floor for an animal house comprises a moulded body 10 of durable substantially non-deformable rubber. The rubber preferably comprises a mixture of synthetic butetine rubber and natural rubber having a Shore hardness factor (SHF) of between 45 and 80. A rubber mixture having a specific density of 1.5 produces a rubber having a SHF of 45 while a rubber mixture having a specific density of 2.0 produces a tile with a SHF of 80. In the present embodiment a rubber having a SHF of 65 is preferably used.

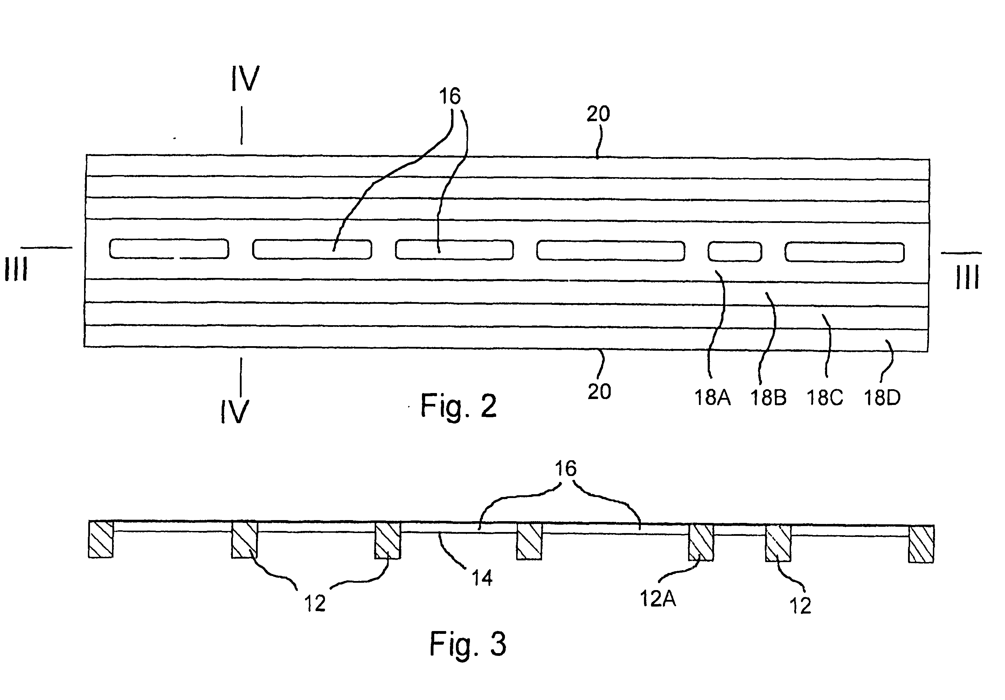

The tile 10 is a highly elongated rectangle in plan view (Fig. 2) and is laterally symmetric relative to a longitudinal centre line III-III. A plurality of studs 12, integral with the tile, extend downwardly from the otherwise flat underside 14 of the tile. The studs 12 lie along the centre line III-III and are equally spaced apart except for one stud 12A, Fig. 3, which is displaced towards its neighbour (the right hand neighbour as seen in Fig. 3). A respective slot 16 is formed in the tile between each pair of studs 12 or 12A, the longitudinal direction of the slots 16 being aligned with the centre line III-III.

On each side of the longitudinal centre line III-III the top surface of each tile 10 can be considered to comprise a series of longitudinal parallel strips 18A to 18D. These are, taken in the direction from the centre line to the longitudinal edge 20 of the tile, an initial flat or horizontal strip 18A adjacent the slots 16, an upwardly inclined strip 18B contiguous with the strip 18A, a downwardly inclined strip 18C meeting the strip 18B at an apex 22, and a further horizontal strip 18D contiguous with the strip 18C.

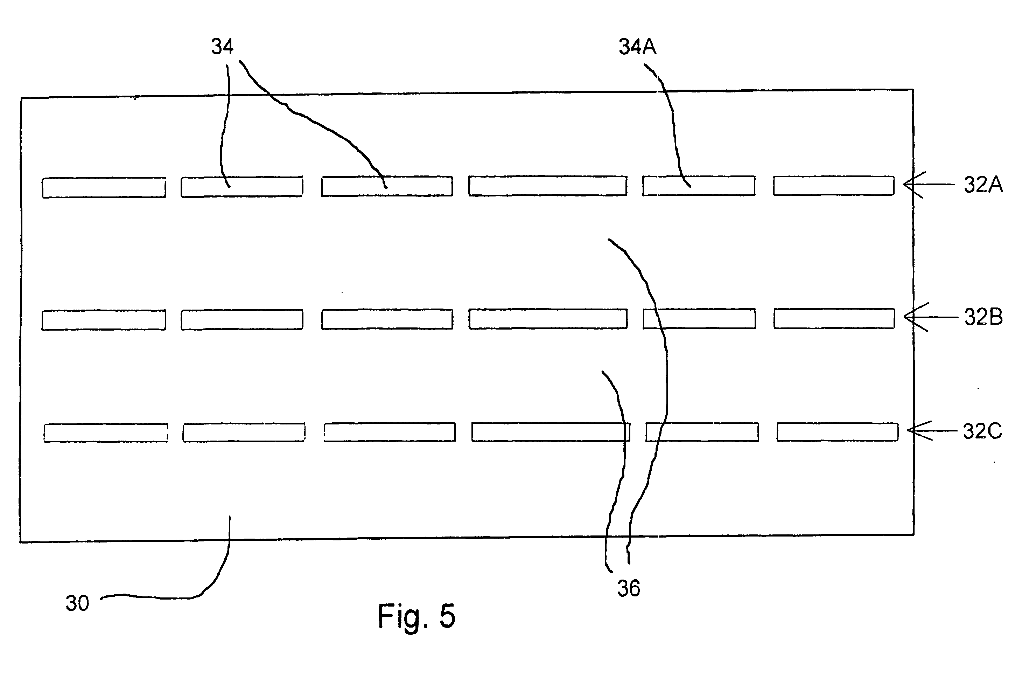

In use, a plurality of the floor tiles 10 are disposed side by side on a rectangular concrete slat base 30 of the type illustrated in Fig. 5. The base 30 has a plurality of mutually parallel rows 32A, 32B, 32C of elongate apertures 34. In each row 32 the apertures 34 are disposed end-to-end in a straight line. The base 30 is supported substantially horizontally over a sub-floor (not shown) so that animal waste falling on the base eventually falls through the apertures 34 onto the sub-floor. The concrete base 30 may be larger than that shown, i.e. it may have more than three parallel rows 32A, 32B and 32C and the rows may have more apertures 34 than the six shown. Alternatively, a larger base may be built in modular fashion from a number of bases 30 by positioning the bases side-by-side and/or end-to-end in a horizontal plane.

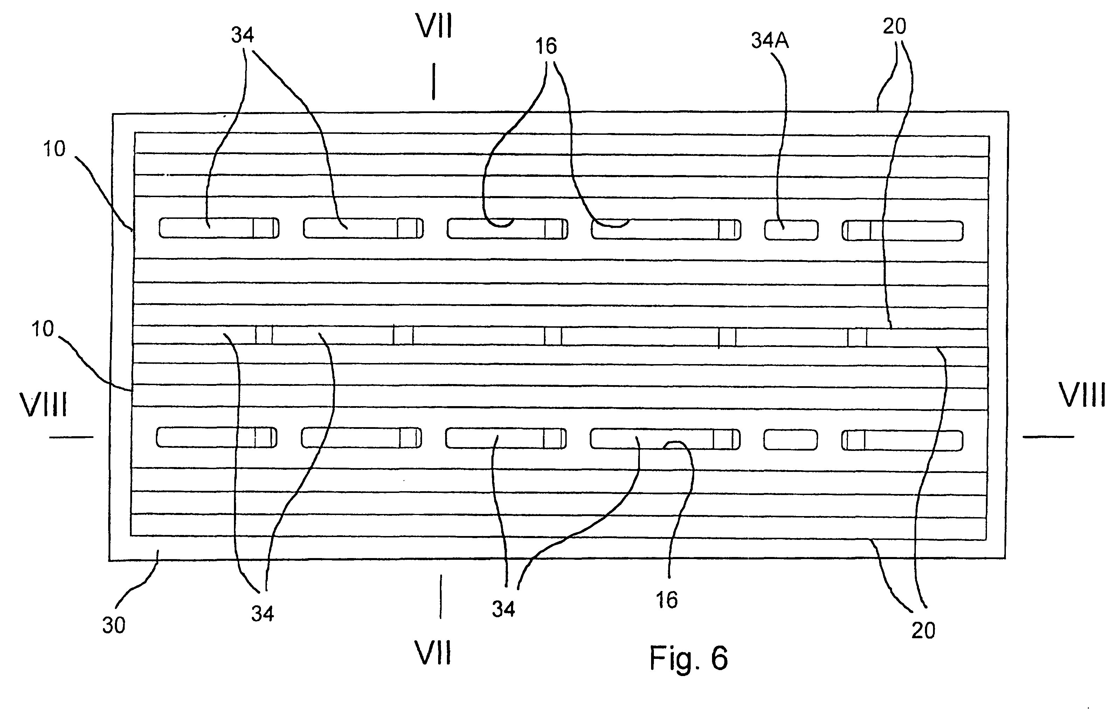

The base 30 provides footholds 36 running between the rows 32 for supporting animals. Animals may be housed in sheds with such concrete slat flooring for several months during the winter. Concrete is particularly uncomfortable to stand on for extended periods time and standing on such slats for long periods can prove detrimental to the health of an animal. Accordingly, the floor tiles 10 are laid on the base 30 in the manner now to be described with reference to Figs. 6 to 8 to provide a more comfortable foothold for an animal.

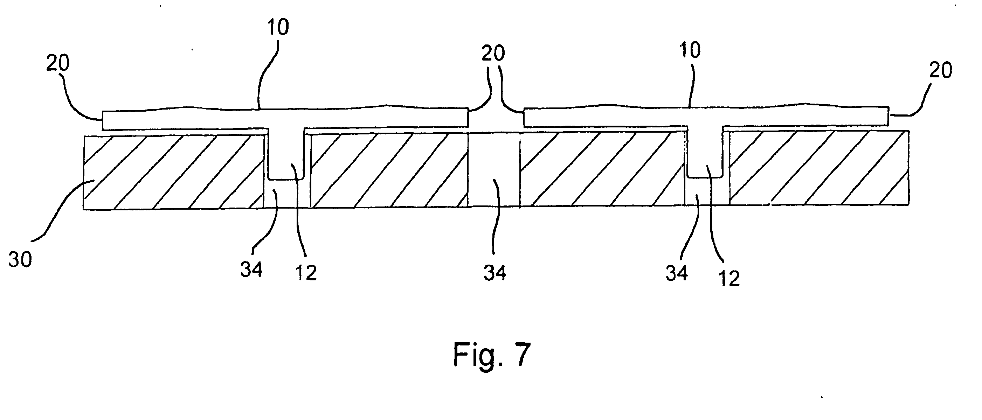

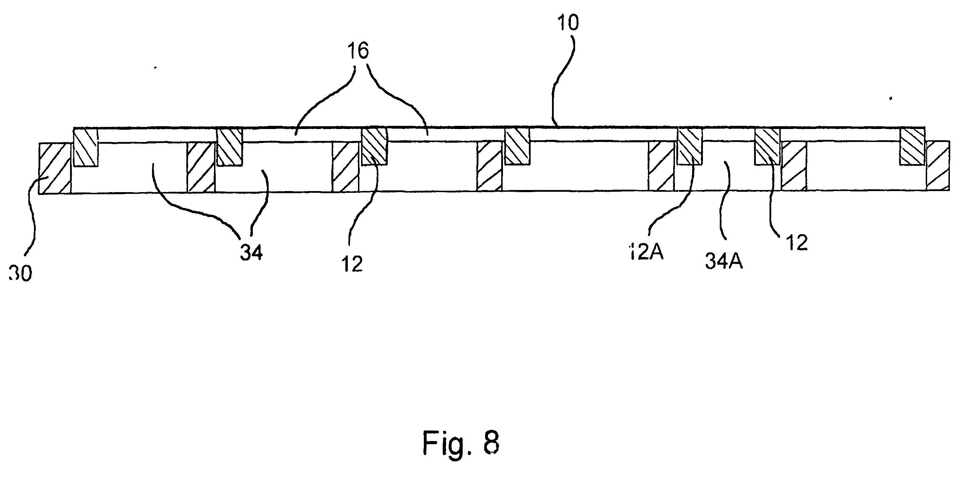

In the example shown in Figs. 5 to 8, two tiles 10 are laid side-by-side on the base 30. One tile 10 (the upper tile as seen in Fig. 6) is laid with its centre axis III-III directly over the row 32A so that its studs 12 enter the apertures 34 of that row in the manner seen in Figs. 7 and 8. The other tile 10 is likewise laid with its centre axis III-III directly over the row 32C so that its studs 12 enter the apertures 34 of that row in the same manner. The lateral width of the studs 12 is just slightly less than the width of the apertures 34. It will be seen that whereas most of the apertures 34 are engaged by only a single stud 12, the aperture 34A is engaged by two studs, i.e. the stud 12A and its nearest neighbour, which are located at opposite ends of the aperture 34A. This stabilises the tile 10 against longitudinal movement relative to the base 30, while the studs 12 and 12A collectively stabilise the tile against lateral movement.

As seen in Fig. 6 and 8, the slots 16 in each tile are largely in register with the apertures 34 or 34A in rows 32A and 32C in the underlying concrete base 30, so that the greater part of each aperture 34/34A is revealed by the respective slot 16. Thus, animal waste falling onto the tile 10 may pass through the apertures 34 in the rows 32A, 32B to the sub-floor area, assisted by the gradient of the surface strip 18B.

Furthermore, the adjacent longitudinal edges 20 of the tiles 10 are spaced apart to define a gap 38 coincident with the apertures 34 in the row 32B. Thus the apertures 34 in the row 32B are revealed between the edges 20 of the adjacent tiles 10. Thus, animal waste falling onto the tiles 10 may also pass through the apertures 34 in the row 32B to the sub-floor area, assisted by the gradient of the surface strips 18C.

It will be noted that, except where the apertures 34, 34A are revealed, substantially the entire concrete base 30 is covered by the tiles. Because the floor tiles 10 are fabricated from relatively durable rubber, wear from continuous use by animals over a period of several months is mitigated. Also, it has been found that the horizontal strips 18A and 18D on the top surface of the tiles 10 are desirable in order to provide square edges to the slots 16 and to the edges 20, to stop the animal hooves slipping off the tiles.

In the case of a base 30 having more rows 32 and/or more apertures 34 in each row, more than two tiles 10 will generally be used to cover the base. In general, a tile 10 will be laid in the manner described along each alternate row of apertures 34, so that the apertures in those rows are revealed by the slots 16 and the apertures in the intervening rows will be revealed by the gap 38 between the edges of adjacent tiles. For long rows, a number of tiles may be laid end-to-end.

Naturally the dimensions of the tiles 10 will be chosen to suit the dimensions of the underlying concrete base, but an actual example has been constructed with the following main dimensions:

| | |
|---|---|
| Length | 1715mm |
| Width | 366mm |
| Stud depth | 50mm |
| Thickness | 20mm approx. |

The invention is not limited to the embodiment described herein which may be modified or varied without departing from the scope of the invention.

## Claims

1. A floor for an animal house, comprising a concrete base (30) having a plurality of elongated apertures (34) disposed in rows, and a plurality of rubber floor tiles (10) each having at least one slot (16) formed therein, said tiles disposed on the concrete base and at least partially revealing at least some of the apertures, each tile being retained in position on the base by at least one projection (12) extending downwardly from the underside of the tile into at least one aperture in the base, **characterised in that**:
said tiles (10) are laid in rows along each alternate row of apertures (34), so that the apertures in those rows are revealed by the slots (16) in the tiles and the apertures in the intervening rows are revealed by the gaps (38) between the edges of adjacent rows of tiles.

2. A floor as claimed in claim 1, wherein the apertures (34) comprise parallel elongated apertures, and wherein the floor tiles (10) are elongated in a direction parallel to the apertures and disposed side by side on the concrete base.

3. A floor as claimed in claim 2, wherein each tile (10) has at least two projections (12) engaging the concrete base (30) in such a way as to stabilise the tile against both longitudinal and lateral movement relative to the base.

4. A floor as claimed in claim 2 or 3, wherein the apertures (34) are disposed in a plurality of parallel rows (32a-32c) with each row comprising a plurality of apertures disposed end-to-end in a straight line, and wherein each tile (10) is disposed parallel to the rows and has a plurality of said downward projections (12) lying along a straight line, which projections engage a plurality of the apertures in a single row.

5. A floor as claimed in claim 4, wherein each tile (10) has a slot (16) between each adjacent pair of projections (12), the slots in the tile revealing the apertures (34) in the said single row.

6. A floor as claimed in claim 5, wherein the slots (16) are disposed along a longitudinal centre line (III-III) of the tile (10) and the tile has lateral symmetry relative to the centre line.

7. A floor as claimed in claim 6, wherein on each side of the longitudinal centre line the top surface of each tile (10) is first inclined upwardly (18B) away from the longitudinal centre line and is then inclined downwardly (18C) towards the longitudinal edge of the tile.

8. A floor as claimed in any one of claims 4 to 7, wherein the projections (12) in the straight line are equally spaced apart except for one projection (12A) which is displaced towards a neighbour, the one projection and its neighbour engaging opposite ends of a single aperture (34A) in the base (30).

9. A floor as claimed in any one of claims 4 to 8, wherein the longitudinal edges (20) of adjacent tiles are spaced apart to reveal a row of apertures (34) in the concrete base (30).

10. A floor tile for a floor as claimed in any preceding claim.

## Patentansprüche

1. Boden für ein Tierhaus, der Folgendes umfasst: eine Betonbasis (30) mit einer Vielzahl von länglichen Öffnungen (34), die in Reihen angeordnet sind, und eine Vielzahl von Gummibodenplatten (10), von denen jede mindestens einen Schlitz (16) aufweist, der darin gebildet ist, wobei die Platten auf der Betonbasis angeordnet sind und mindestens teilweise einige der Öffnungen freilegen, wobei jede Platte mit Hilfe mindestens eines Vorsprungs (12), der sich abwärts von der Unterseite der Platte in die mindestens eine Öffnung erstreckt, auf der Basis in Position gehalten wird, **dadurch gekennzeichnet, dass**:
die Platten (10) entlang jeder alternierenden Reihe von Öffnungen (34) in Reihen gelegt sind, so dass die Öffnungen in diesen Reihen von den Schlitzen (16) in den Platten freigelegt werden und die Öffnungen in den dazwischenliegenden Reiben durch die Spalten (38) zwischen den Kanten benachbarter Reihen von Platten freigelegt werden.

2. Boden nach Anspruch 1, wobei die Öffnungen (34) parallele längliche Öffnungen umfassen und die Bodenplatten (10) in einer Richtung parallel zu den Öffnungen verlängert sind und nebeneinander auf der Betonbasis angeordnet sind.

3. Boden nach Anspruch 2, wobei jede Platte (10) mindestens zwei Vorsprünge (12) aufweist, die in die Betonbasis (30) in solcher Weise eingreifen, dass die Platte sowohl gegen Längs- als auch seitliche Bewegung im Verhältnis zu der Basis stabilisiert wird.

4. Boden nach Anspruch 2 oder 3, wobei die Öffnungen (34) in einer Vielzahl von parallelen Reihen (32a - 32c) angeordnet sind, wobei jede Reihe eine Vielzahl von Öffnungen umfasst, die Ende an Ende in einer geraden Linie angeordnet sind, und jede Platte (10) parallel zu den Reihen angeordnet ist und eine Vielzahl der abwärts gerichteten Vorsprünge (12) aufweist, die entlang einer geraden Linie liegen, wobei die Vorsprünge in eine Vielzahl der Öffnungen in einer einzelnen Reihe eingreifen.

5. Boden nach Anspruch 4, wobei jede Platte (10) einen Schlitz (16) zwischen jedem benachbarten Paar von Vorsprüngen (12) aufweist, wobei die Schlitze in der Platte die Öffnungen (34) in der einzelnen Reihe freilegen.

6. Boden nach Anspruch 5, wobei die Schlitze (16) entlang einer Längsmittellinie (III- III) der Platte (10) angeordnet sind und die Platte eine laterale Symmetrie im Verhältnis zu der Mittellinie aufweist.

7. Boden nach Anspruch 6, wobei die Oberseite jeder Platte (10) an jeder Seite der Längsmittellinie zuerst weg von der Längsmittellinie aufwärts (18B) geneigt ist und daraufhin abwärts (18C) in Richtung der Längskante der Platte geneigt ist.

8. Boden nach einem der Ansprüche 4 bis 7, wobei die Vorsprünge (12) auf der geraden Linie gleich beanstandet sind, abgeschen von einem Vorsprung (12A), der in Richtung eines Nachbars versetzt ist, wobei der eine Vorsprung und sein Nachbar in entgegengesetzte Enden einer einzelnen Öffnung (34A) in der Basis (30) eingreifen.

9. Boden nach einem der Ansprüche 4 bis 8, wobei die Längskanten (20) benachbarter Platten beanstandet sind, um eine Reihe von Öffnungen (34) in der Betonbasis (30) freizulegen.

10. Bodenplatte für einen Boden nach einem der vorhergehenden Ansprüche.

## Revendications

1. Sol pour une étable, comportant une dalle en béton (30) ayant une pluralité d'ouvertures allongées (34) disposées en rangées, et une pluralité de carreaux de sol en caoutchouc (10) chacun ayant au moins une fente (16) y étant formée, lesdits carreaux disposés sur la dalle en béton et rendant visibles au moins partiellement au moins quelques-unes des ouvertures, chaque carreau étant retenu en place sur la dalle par au moins une projection (12) se prolongeant vers le bas par rapport à la partie inférieure du carreau dans au moins une ouverture dans la dalle, **caractérisé en ce que** :
lesdits carreaux (10) sont posés en rangées le long de chaque rangée d'ouvertures (34) sur deux, de telle manière que les ouvertures de ces rangées sont rendues visibles par les fentes (16) dans les carreaux et les ouvertures dans les rangées intermédiaires sont rendues visibles par les interstices (38) entre les bords des rangées adjacentes de carreaux.

2. Sol selon la revendication 1, dans lequel les ouvertures (34) comportent des ouvertures allongées parallèles, et dans lequel les carreaux de sol (10) sont allongés dans une direction parallèle aux ouvertures et disposés côte à côte sur la dalle de béton.

3. Sol selon la revendication 2, dans lequel chaque carreau (10) a au moins deux projections (12) s'engageant avec la dalle en béton (30) de telle manière à stabiliser le carreau contre tout mouvement longitudinal et tout mouvement latéral par rapport à la dalle.

4. Sol selon la revendication 2 ou la revendication 3, dans lequel les ouvertures (34) sont disposées en une pluralité de rangées parallèles (32a-32c), chaque rangée comportant une pluralité d'ouvertures disposées bout à bout sur une ligne droite, et dans lequel chaque carreau (10) est disposé de manière parallèle par rapport aux rangées et a une pluralité de dites projections vers le bas (12) reposant le long d'une ligne droite, projections qui s'engagent avec une pluralité des ouvertures en une seule rangée.

5. Sol selon la revendication 4, dans lequel chaque carreau (10) a une fente (16) entre chaque pair adjacente de projections (12), les fentes dans le carreau rendant visibles les ouvertures (34) dans ladite seule rangée.

6. Sol selon la revendication 5, dans lequel les fentes (16) sont disposées le long d'un axe longitudinal (III-III) du carreau (10) et le carreau a une symétrie latérale relative à l'axe.

7. Sol selon la revendication 6, dans lequel sur chaque côté de l'axe longitudinal la surface supérieure de chaque carreau (10) est tout d'abord inclinée vers le haut (18B) à distance de l'axe longitudinal et est ensuite inclinée vers le bas (18C) vers le bord longitudinal du carreau.

8. Sol selon l'une quelconque des revendications 4 à 7, dans lequel les projections (12) dans la ligne droite sont espacées de manière équidistante à l'exception d'une projection (12A) qui est déplacée vers une voisine, la une projection et sa voisine s'engageant avec les extrémités opposées d'une seule ouverture (34A) dans la dalle (30).

9. Sol selon l'une quelconque des revendications 4 à 8, dans lequel les bords longitudinaux (20) des carreaux adjacents sont espacés pour rendre visible une rangée d'ouvertures (34) dans la dalle de béton (30).

10. Carreau de sol pour un sol selon l'une quelconque des revendications précédentes.
